# EUROPEAN PATENT APPLICATION

(11) **EP 1 617 700 A1**
(43) Date of publication of application: **18.01.2006**
(21) Application number: 05000418.3
(22) Date of filing: 11.01.2005
(51) Int. Cl.: H04R 1/10

(54) **Connector attached bluetooth wireless earphone**

(30) Priority: 11.07.2004 CN 200420733644
(71) Applicant: Global Target Enterprise INC., Taipei, Taiwan (TW)
(72) Inventor: Wu, Wei-Shui, Hsin-Tien Taipei (TW)
(74) Representative: Viering, Jentschura & Partner

(57) **Abstract**

A connector attached bluetooth wireless earphone is set forth. More than one connector are attached to the earphone at random locations such that they are connected directly or indirectly with a microphone or cassette connector and then properly fix the microphone in the vehicle where it is convenient to serve when it is incorporated with the use of a bluetooth cellular phone, and can optionally insert the signal wire terminal of the microphone into the attached connector of the bluetooth wireless earphone to receive the audio output. Alternatively, the microphone may be directly built in the bluetooth wireless earphone to receive the audio output. In the case the bluetooth wireless earphone is connected to the cassette connector with each other, the voice signal can be outputted via cassette connector, and then transmitted to a speaker in an on-vehicle audio equipment and outputted therefrom in an on-vehicle hand free receiver mode.

## Description

### BACKGROUND OF THE INVENTION

### 1. Field of the invention

The present invention relates to a connector attached bluetooth wireless earphone, in particular, a bluetooth wireless earphone having connectors to be connected to a cassette, a microphone connector, or a built-in microphone to become a hand free bluetooth wireless earphone usable in a vehicle.

### 2. Description of the Prior Art

It is prohibited by the traffic law for the driver to use his/her portable cellular phone in the vehicle during the vehicle is running. For this reason there have appeared a variety of hand-free telephones for use in the vehicle obtainable on the market. However, such hand-free telephones can not be used when the driver is out of the vehicle therefore they are not fully convenient.

After the disclosure of the bluetooth wireless earphone, it has become possible to solve aforesaid problem by conjoined use of the bluetooth cellular phone with the bluetooth earphone hanging on the driver's head. In this way the driver is able to use the phone even out of the vehicle. In the meanwhile, it is uncomfortable to have an earphone hanging on the head for a long time, therefore the disclosure of the bluetooth earphone is by no means a real solution to aforesaid problem.

For these shortcomings noticeable on the prior art, an improvement is seriously required.

It is what the reason the inventor has put forth every effort by continuous research and experimentation attempting to find out the remedy to palliate the inherent shortcomings of the conventional techniques described above, and at last has succeeded in coming up with the present invention.

### SUMMARY OF THE INVENTION

The main object of the present invention is to provide a connector attached bluetooth wireless earphone which can be used in the vehicle in hand-free mode after connected to a microphone or a cassette connector.

Another object of the present invention is to provide a connector attached bluetooth wireless earphone that the connector can be attached to any location in the bluetooth wireless earphone without requiring any complicated electric circuit layout.

Another object of the present invention is to provide a connector attached bluetooth wireless earphone that the attached connectors may be various types of connectors capable of conveniently accepting transfer extension wires.

Another object of the present invention is to provide a connector attached bluetooth wireless earphone which is easily applicable, functional with a simple structure and a long lifetime.

To achieve these and other objects mentioned above, in the bluetooth wireless earphone of the present invention, more than one connectors can be attached to the earphone at random locations such that they are connected directly or indirectly with a microphone or a cassette connector and then properly fix the microphone in the vehicle where it is convenient to receive voice when it is incorporated with the use of a bluetooth cellular phone, and can optionally insert the signal wire terminal of the microphone into the attached connector of the bluetooth wireless earphone to receive the audio output. Alternatively, the microphone may be directly built in the bluetooth wireless earphone to receive the audio output. In the case the bluetooth wireless earphone is connected to the cassette connector with each other, the voice signal can be outputted via cassette connector, and then transmitted to a speaker in an on-vehicle audio equipment and outputted therefrom in an on-vehicle hand free receiver mode.

### BRIEF DESCRIPTION OF THE DRAWINGS

The features and advantages of the present invention will be fully understood and appreciated from the description of the preferred embodiment accompanied with the following drawings in which:
Fig. 1 is a perspective view of the connector attached bluetooth wireless earphone of the present invention;
Fig. 2A and Fig. 2B are schematic views of a first embodiment according to the present invention;
Fig. 3A and Fig. 3B are schematic views of a second embodiment according to the present invention;
Fig. 4A and 4B are perspective views of a third embodiment according to the present invemtion;
Fig. 5 is a perspective view of a fourth embodiment according to the present invention; and
Fig. 6 is an illustrative view demonstrating how the customer attached bluetooth wireless earphone according to the present invention is used as a hand-free receiver in a vehicle.

### DETAILED DESCRIPTION OF THE PREFERRED EMBODIMENT

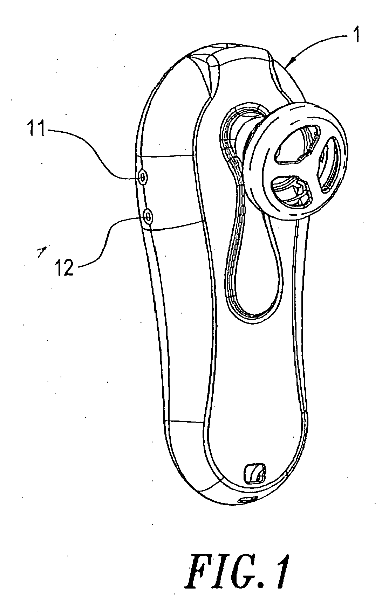

Referring to Fig. 1, in this perspective view of the present invention, a first and a second connectors 11 and 12 are attached at random on a bluetooth wireless earphone 1 in the manner according to actual requirement, and are connected to an electric circuit board equipped in the bluetooth wireless earphone 1 so as to be able to directly or indirectly interconnected to a microphone and a cassette connector.

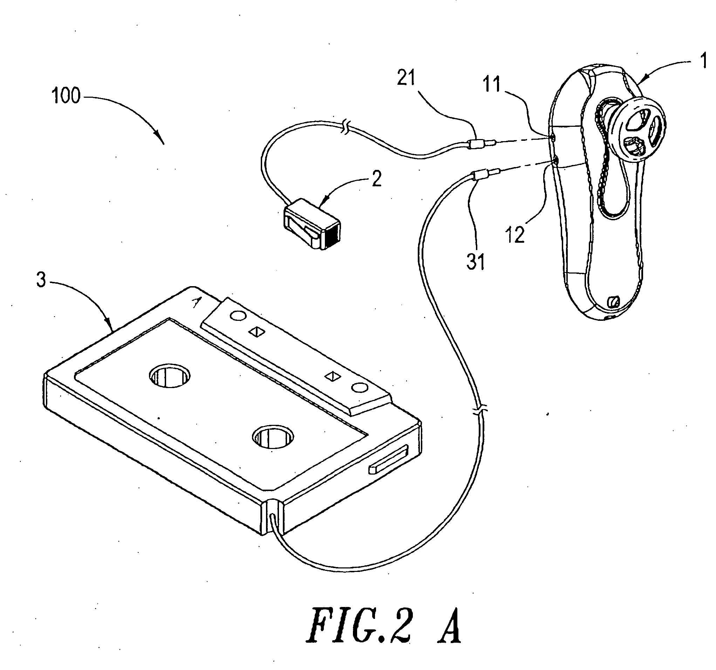

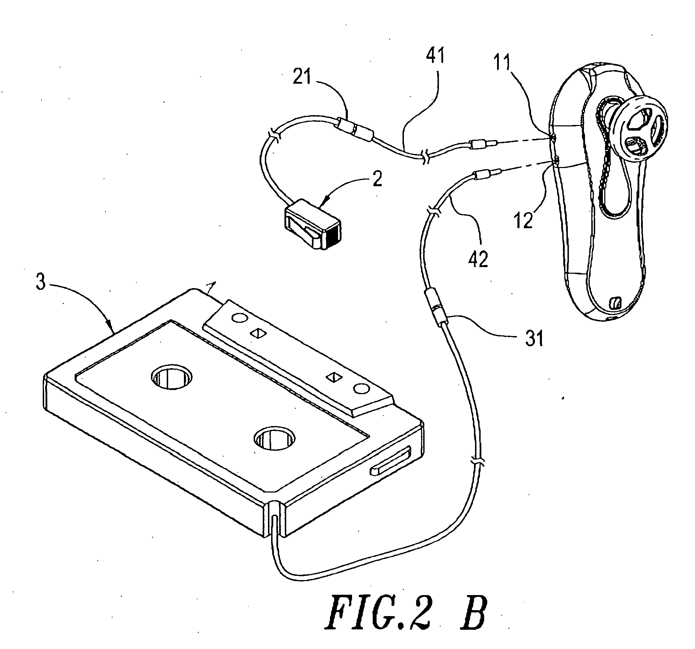

In the schematic view of first embodiment of the present invention shown in Fig. 2A, the first and the second connectors 11 and 12 are both provided on the outer surface of the housing of the bluetooth wireless earphone 1. The first and the second connectors 11 and 12 respectively allow a signal wire terminal 21 of the microphone 2 and a signal wire terminal 31 of the cassette connector 3 to insert into thereby forming an on-vehicle hand free receiver 100.

In another schematic view of a first embodiment of the present invention shown in Fig. 2B, in view of the fact that the size of the bluetooth wireless earphone has a trend to become smaller and shorter, a careful attention should be taken to define specifications for the connector. In addition, the extendable maximum length for both signal wires of the microphone 2 and cassette connector 3 has a limit that in turn limits the selection for location of the device when it is to be equipped in the vehicle. For solving the aforesaid problem, in the present invention, transfer extension wires 41 and 42 are respectively provided between the first connector I 1 and the signal wire terminal 21 of the microphone 2, and between the second connector 12 and the signal wire terminal 31 of the cassette connector 3.

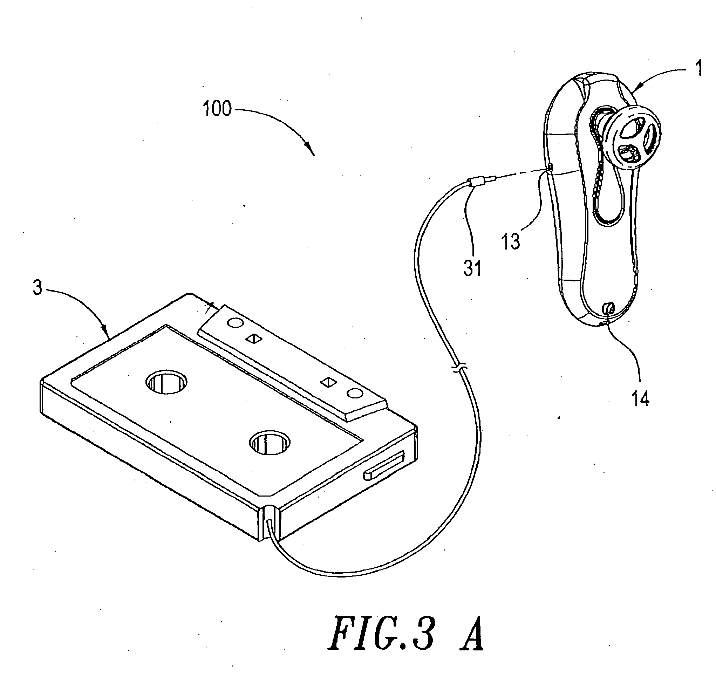

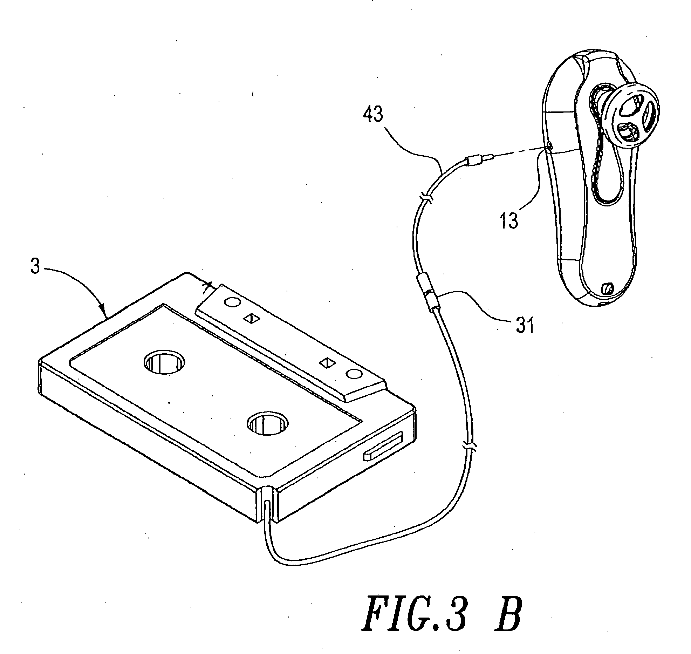

In the schematic view of a second embodiment of the present invention shown in Fig. 3A, only one connector 13 is provided on the outer surface of the housing of the bluetooth wireless earphone 1 to allow the signal wire terminal 31 of the cassette connector 3 to insert into. With such arrangement, an on-vehicle hand free receiver 100 will be accomplished by joining a microphone 14 built in the bluetooth wireless earphone 1.

In another schematic view of a second embodiment of the present invention shown in Fig. 3B, a transfer extension wire 43 is provided between the connector 13 and the signal wire terminal 31 of the cassette connector 3 so as to solve the problem which might arise form the incompatibility of wire specification or shortage of length for wiring.

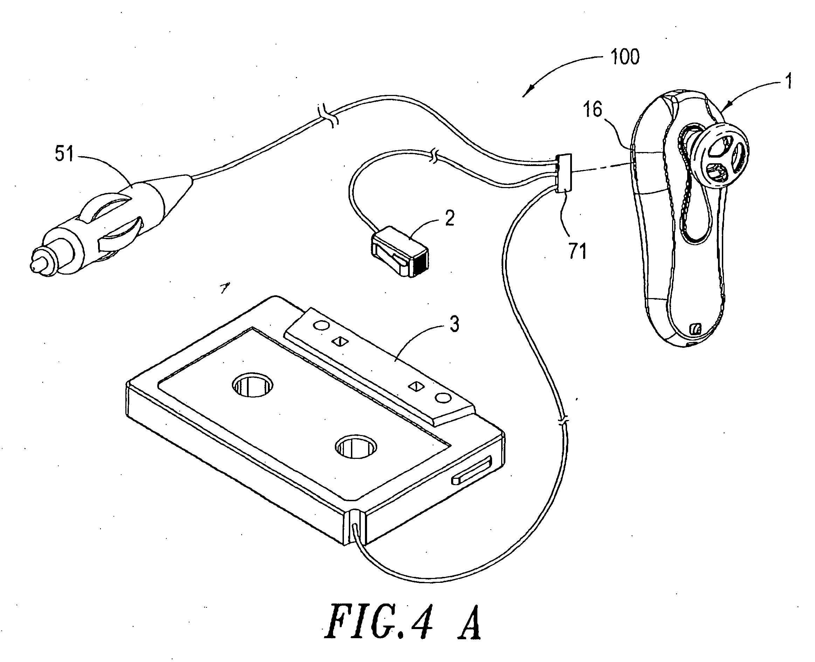

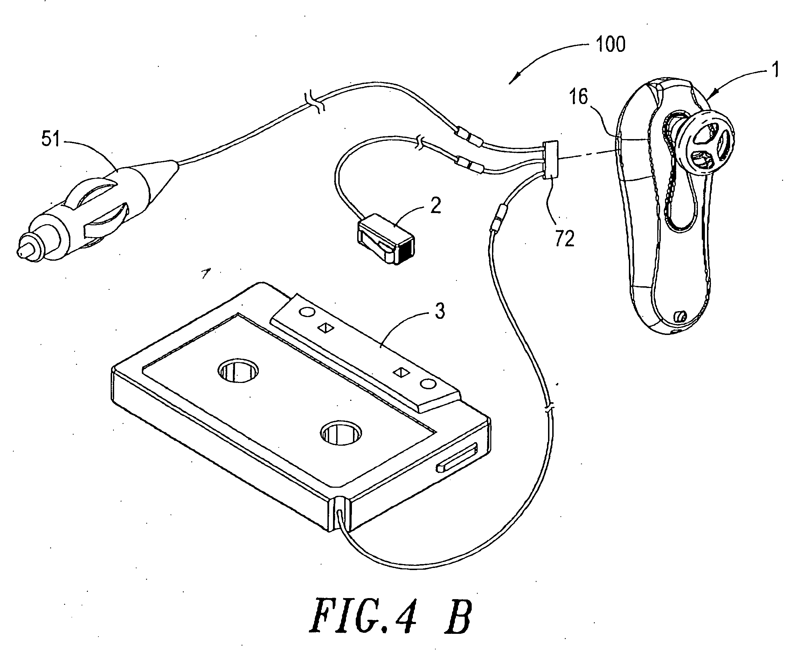

In a third embodiment of the present invention shown in Fig. 4A, only a connector 16 allowable to insert a connector terminal block 71 therein is provided on the outer surface of the housing of the bluetooth wireless earphone 1. This connector terminal block 71 is then connected to the microphone 2, the cassette connector 3, and vehicle battery charger terminals 51 with signal wires so as to accomplish establishment of a chargeable bluetooth wireless earphone 1 usable as a hand-free receiver 100 in the vehicle.

In still a third embodiment of the present invention shown in Fig. 4B, for the convenience of the user, a connector terminal block 72 is provided with three input terminal units and one output terminal unit so as to selectively connect the microphone 2, cassette connector 3 or the vihicle battery charger terminals 51 to the input terminals of the connector terminal block 72 while the output terminal , unit is connected to the blustooth wireless earphone 1 thereby improving the receiving effect and capable of charging the battery unit at a proper time.

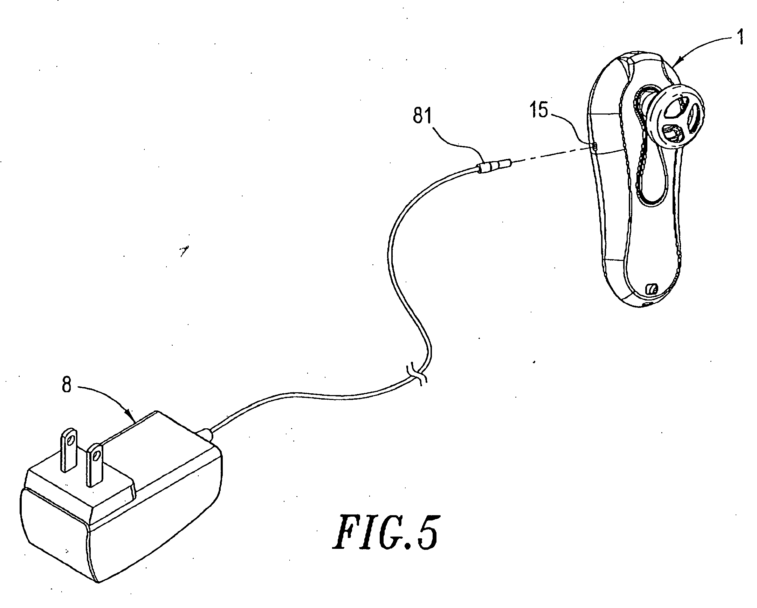

In a fourth embodiment of the present invention shown in Fig. 5, only one connector 15 to electrical terminals 81 of a battery charger 8 is provided on the outer surface of the housing of the bluetooth wireless earphone 1. With such arrangement. The internal battery unit for supplying power to the bluetooth wireless earphone 1 can be charged with an external power source.

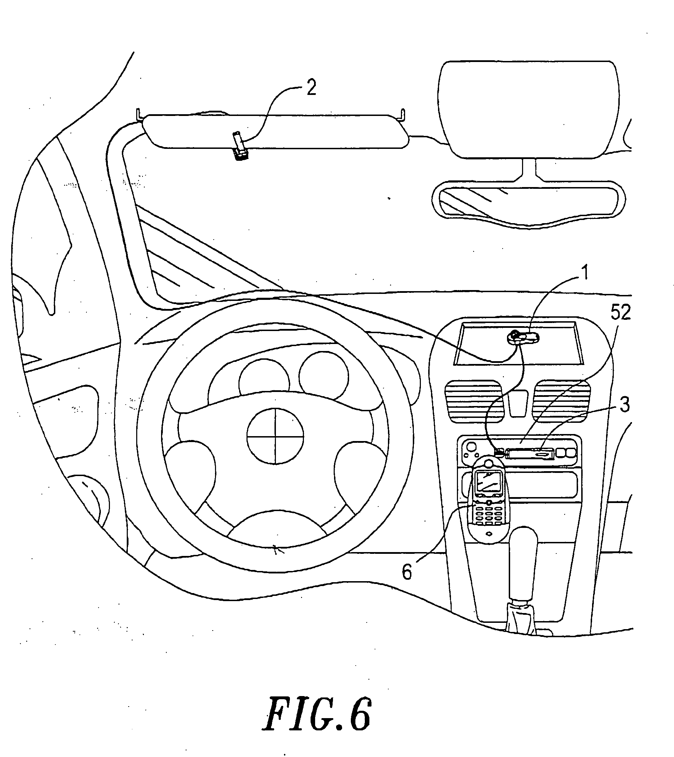

As for how to use the earphone of the present invention in the vehicle as an hand free receiver, please refer to Fig. 6. As shown in Fig. 6, the microphone 2 may be clipped to a proper position and insert the signal wire terminals 21 of the microphone 2 into the connector of the bluetooth wireless earphone 1, and insert the signal wire terminals 31 of the cassette connector 3 into the other connector of the bluetooth wireless earphone 1, finally set the cassette connector 3 in a car audio equipment 52 thereby completing the installation of the on-vehicle hand free receiver. By adding a bluetooth cellular phone 6, the driver can carry out the aim of on-vehicle wireless communication conveniently.

According to actual requirements of the products, the aforesaid connector and extension wires may have various specified forms, for example, circular hole terminals, male and female pin contact, USB type connector etc.

It emerges from the above description that the connector attached bluetooth wireless earphone has several noteworthy advantages when being compared with any one made according to the prior art, namely:
1.The earphone of the present invention may be carried with the user for application, or interconnected with the connectors of a microphone and a cassette, and then set on the vehicles as a hand free receiver.
2.The connector may be clipped to a proper position on the bluetooth wireless earphone without the need for complicated wiring layout.
3.The connector may be made into various forms to meet the special application, and facilitate installation by employing a transfer extension wire.
4.The bluetooth wireless earphone of the present invention is simply constructed, easy to handle, multi-functional and has a long life time.

Many changes and modifications in the above described embodiment of the invention can, of course, be carried out without departing form the scope thereof. Accordingly, to promote the progress in science and the useful arts, the invention is disclosed and intended to be limited only by the appended claims.

## Claims

1. A connector attached bluetooth wireless earphone 1 having more than one connectors 11, 12, 13, 15, 16 provided at random on said bluetooth wireless earphone 1, wherein said connectors are interconnected with an electric circuit board in said earphone 1 so as able to connect directly or indirectly with external electronic devices.

2. The earphone of claim 1, wherein said external electronic device is a microphone 2 or a cassette connector 3.

3. The earphone of claim 1, wherein a' first connector 11 and a second connector 12 are provided on the outer surface of the housing of said bluetooth wireless earphone 1, said first connector 11 is connected with said microphone 2, and said second connector 12 is connected with said cassette connector 3 so as to form an on-vehicle hand free receiver 100.

4. The earphone of claim 1, wherein only one connector 13 is provided on the outer surface of said housing thereof, said connector 13 is connected with said cassette connector 3 so as to form an on-vehicle hand free receiver 100 associated with a microphone 14 built in said earphone 1.

5. The earphone of claim 1, wherein only one connector 16 is provided on the outer surface of said housing thereof, said connector 16 is then connected to the terminals 71 of said microphone 2, said cassette connector 3, and vehicle battery charger 51 so as to form a chargeable hand-free receiver 100 usable in the vehicle.

6. The earphone of claim 1, wherein only one connector 15 is provided on the outer surface of said housing thereof said connector 15 can be connected to a battery charger 8 for changing the battery unit of said bluetooth wireless earphone 1.

7. The earphone of claim 3, wherein a transfer extension wires 41, 42 are selectively provided between said connector 11 and said microphone 2, or between said connector 12 and said cassette connector 3.

8. The earphone of claim 4, wherein a transfer extension wire 43 is provided between said connector 13 and said cassette connector 3.

9. The earphone of claim 5, wherein said connector 16 is connected to the terminals 72 provided with three input terminal units and one output terminal unit so as to selectively connect said microphone 2, said cassette connector 3 or said vehicle battery charger 51 to said input terminals of said connector 16, while said output terminal unit is connected to the connector 16 of said bluetooth wireless earphone 1.
